## Europäisches Patentamt

## European Patent Office

## Office européen des brevets

(11) Publication number: **0 221 185**
**B1**

(12) **EUROPEAN PATENT SPECIFICATION**

(45) Date of publication of patent specification: **11.04.90**

(21) Application number: **86900857.3**

(22) Date of filing: **21.01.86**

(86) International application number:
**PCT/KR86/00003**

(87) International publication number:
**WO 86/06562 06.11.86 Gazette 86/24**

(51) Int. Cl.⁵: **H 02 H 3/093, H 02 H 3/04**

(54) **ELECTRONIC OVERCURRENT RELAY.**

(30) Priority: **26.11.85 KR 858845**

(43) Date of publication of application:
**13.05.87 Bulletin 87/20**

(45) Publication of the grant of the patent:
**11.04.90 Bulletin 90/15**

(84) Designated Contracting States:
**AT BE CH DE FR GB IT LI SE**

(56) References cited:
**FR-A-2 140 282**
**FR-A-2 284 208**
**JP-A-53 068 842**
**JP-A-57 183 215**
**JP-U-53 141 333**
**US-A-3 582 982**
**US-A-4 306 270**

(73) Proprietor: **KIM, In Suk**
**134-21 Samik Apt. 10-615 Chongdamdong**
**Kangnam-ku, Seoul 135 (KR)**

(72) Inventor: **KIM, In Suk**
**134-21 Samik Apt. 10-615 Chongdamdong**
**Kangnam-ku, Seoul 135 (KR)**

(74) Representative: **Kador & Partner**
**Corneliusstrasse 15**
**D-8000 München 5 (DE)**

## Description

The present invention relates to an electronic overcurrent relay in accordance with the preamble of claim 1. Such electronic overcurrent relay is known from US—A—3 582 982.

For protecting a 3-phase AC electric system supplying an AC load, e.g. AC electric motor, against short circuit and overload conditions it is known from US—A—3 582 982 to sense the maximum phase voltage in the system and to supply an electronic overcurrent relay with the sensed voltage signal and with DC power gained from the 3-phase AC electric system by a power bridge rectifier. An auxiliary relay of the electronic overcurrent relay has its contacts connected between the AC supply terminals of the system and the AC load in a no-voltage relation and has its exciting coil connected in series with a switching transistor across the DC output of the power bridge rectifier. The switching transistor is controlled by (i) a momentary or fast operation circuit in the event that the sensed voltage signal which is fed to this circuit is representative to a short circuit condition, and (ii) an overload delay circuit in the event that the sensed voltage signal which is fed in parallel to this delay circuit is representative to an overload condition, and (ii) an overload delay circuit in the event that the sensed voltage signal which is fed to an overload condition, and (iii) a reset overload circuit which automatically resets the switching transistor after the return of the electronic system in its normal condition. As long as the overload delay circuit operates a lamp is visually indicating the occurrence of an overload condition.

However, the known electronic overcurrent relay is unable to settle the accumulation of overload signals caused by frequent starting of a AC motor load. Moreover, the operation of the various circuits of the known electronic overcurrent relay is not defined in logic levels which results in a difficulty to accurately set current and time as desired and in high production costs.

In a further known electronic overcurrent relay according to FR—A—2 140 282 the momentary operation circuit and the overload delay circuit each comprise one or two stages of two sequential transistors from which the second transistor inverts the condition of the first transistor thus resulting in an accurate setting of time and current. However, this known electronic overcurrent relay also lacks of the settlement of accumulation of overload signals. The capacitor C1 of an RC delay means is shunted by the series connection of a diode 45, a transistor T2 and a resistor 27 which is held in the conducting state as long as the normal load condition as appearent. When the second DC voltage exceeds an overload indicating value said series connection is switched off by transistor T2 which results in a charging of the so long shunted capacitor C1. When the charge of capacitor C1 exceeds a threshold value set by a zener diode 46 a control signal is derived which is fed via transistor stage T3, T4 to the bias of switching transistor T7. This operation is performed each time when the sensed voltage exceeds the overload indicating value set by a variable base resistor of the transistor T1 preceeding said shunt transistor T2 in the according transistor stage. Moreover, since the last mentioned electronic overcurrent relay lacks of a reset overlaps circuit a reset in the normal condition not only needs the removal of the blocking state of shunt circuit but also the decrease of the capacitor charge below said threshold value. In the event of an intermittently appearing overload condition the overload switching cycles may overlap with the resetting cycles which results in a continuous exciting of the auxiliary relay, and, hence, in an according continuous break of the power supply to the load.

Similar drawbacks exist with a further known electronic overcurrent relay according to US—A—4 306 270 which uses gates of a CMOS integrated circuit.

It is the object of the invention to provide an improved electronic overcurrent relay which operates reliably even in the event of an accumulation of overload signals caused by a tremulous or pulsating load and, moreover, enables an accurate setting of current and time and a production with low costs.

This object is solved in accordance with the characterized features of claim 1.

Embodiments of the electronic overcurrent relay according to the invention are claimed in subclaims 2 to 13.

The electronic overcurrent relay according to the invention is able to achieve accurate performance as desired and to be produced with low costs by the use of CMOS integrated circuitry having logic state not gates which interconnect the various circuits for momentary, delayed and resetting operation. Moreover, the electronic overcurrent relay according to the invention comprises an overload accumulation prevention circuit which assures an unerringly operation even when tremulously loaded (frequent starting) or pulsatingly loaded (excessive load fluctuation). The electronic overcurrent relay of the invention may be used as a multipurpose relay since it has the function as a no-voltage relay, a couple of induction disk-type overcurrent relay and as an ammeter by use of different outer circuitry to the same electronic overcurrent relay circuit.

The invention is now described with reference to the drawings. In the drawings

Fig. 1 is a connection diagram illustrating the outer connection of the electronic overcurrent relay according to the invention,

Fig. 2 is a circuit diagram of the electronic overcurrent relay according to the invention.

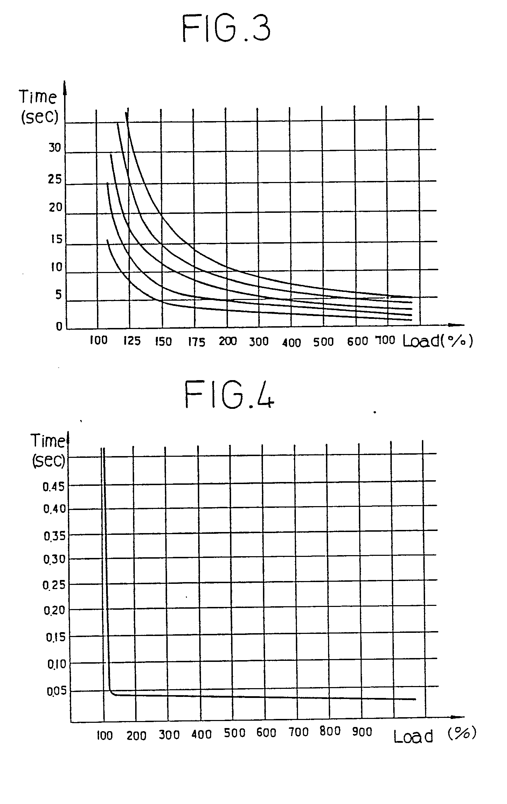

Figure 3 is a curve diagram showing the special character of anti-time-limit overload performance of Fig. 2, and

Figure 4 is a curve diagram showing the special character of momentary overload performance of Figure 2.

* An explanation of the letterings on the plan:

A: Momentary element setting part
B: Negative power distribution voltage rectifying current circuit part
D: Automatic reset overload relay part
E: Delay circuit part
F: Circuit check part
R, S, T: 3-phase AC input terminal
DR: Bridge rectifying current circuit part
$CT_1$ $CT_3$; $CT_4$: Current Transformer
Ca: Capacitor for AC
$R_{19}$: Resistance
TH: Thermistor
$Q_1 \sim Q_5$: Transistor
$G_1 \sim G_7$: Not gate
$SW_1 \sim SW_3$: Selective change-over switch
$S_1$: Test button switch
$S_2$: Reset button switch
$S_3$: On switch
$S_4$: Off switch
LED: Light emitting diode
$D_1 \sim D_{14}$: Diode
$C_1 \sim C_7$: Capacitor
$R_1 \sim R_{18}$: Resistance
$VR_1 \sim VR_{18}$: Variable resistance
RY: Auxiliary relay

Detailed Description of the invention

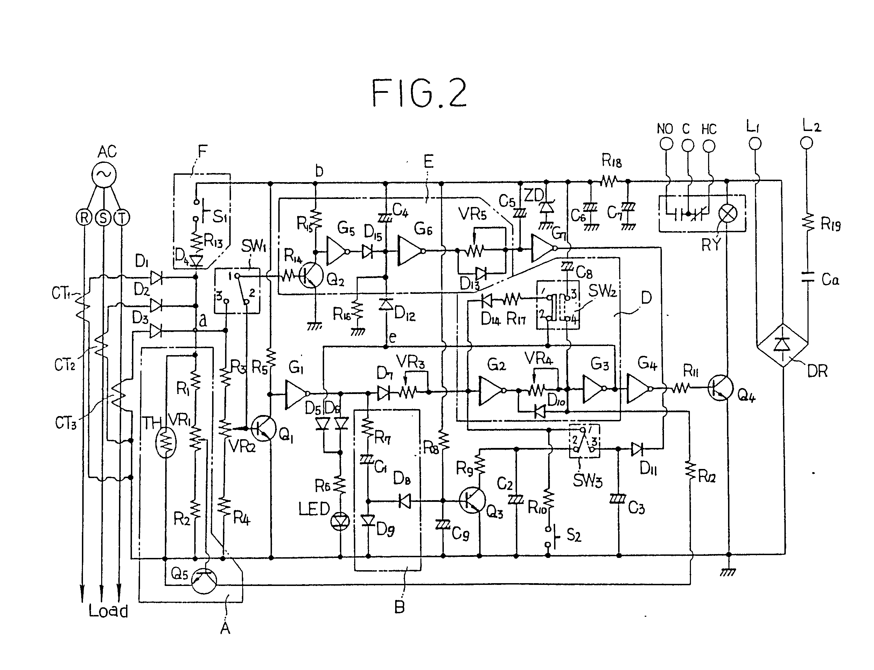

The present invention relates to a no-voltage relay and to an overcurrent relay which makes good use of the integrated circuits of CMOS to remedy such defects as mentioned hereinabove. When an explanation is given to its construction according to Figure 2 attached hereto, it comes as follows:

Connect it to the side of load through current transformers $CT_1$, $CT_2$ and $CT_3$ from 3-phase input terrminals R, S, T. Then, directly connect it to terminal point a through diodes $D_1$, $D_2$, $D_3$ on the secondary sides of current transformers $CT_1$. to $CT_3$ and momentary element setting part A, which is connected in consecutive order to thermistor TH, variable resistance $VR_1$, resistances $R_1$, $R_2$ and transistor $Q_5$, to earthing point. Connect it to earthing point through resistances $R_3$, $R_4$ and variable resistance $VR_2$ from terminal point (a). Connect the terminal on the variable side of this variable resistance $VR_2$ to the base side of transistor $Q_1$ and to the terminal point 2 of selective change-over switch $SW_1$ and connect the collector of this transistor $Q_1$ to terminal point b through resistance $R_5$ and the emitter to the earthing point. From the collector side of transistor $Q_1$, connect it directly to the input terminal of not gate $G_2$ through not gate $G_1$, diode $D_7$ and variable resistance $VR_3$, and from the output side thereof, connect diode $D_{10}$ and variable resistance $VR_4$ in parallel and then connect this terminal to the base side of transistor $Q_4$ through not gates $G_3$ $G_4$ and resistance $R_{11}$. Connect diode $D_6$, resistance $R_6$ and light emitting diode LED to the output side of not gate $G_1$ in consecutive order and then to earthing point. Moreover, form a negative power distribution voltage rectifying current circuit part B by connecting resistance $R_7$, capacitor $C_1$ and diodes $D_8$, $D_9$ from the output

side of not gate $G_1$. Then, connect the cathode diode $D_8$ to earthing point on the anode side of diode $D_9$ and to the base side of transistor $Q_3$. After that, connect this base side to terminal point B through resistance $R_8$ and capacitor $C_9$ to earthing point. Then, connect the collector side of transistor $Q_3$ to the terminal point 2 of selective change-over switch $SW_3$ through resistance $R_9$. Besides, connect capacitor $C_2$ directly to earthing point and earth the emitter of transistor $Q_3$ and connect the bias resistance $R_{14}$ of transistor $Q_2$ from the terminal point 1 of selective change-over switch $SW_1$. Thereafter, connect the collector side of this transistor $Q_2$ to terminal point b through resistance $R_{15}$ and input it to not gate $G_6$ through not gate $G_5$ and diode $D_{15}$ from the terminal on the side of collector and connect variable resistance $VR_5$ and diode$_{13}$ in parallel to the output side thereof. Then, connect it to the terminal point 3 of selective change-over switch $SW_3$through not gate $G_7$ and diode $D_{11}$ and earth this terminal through capacitor $C_3$. From circuit check part F connected to terminal point b from terminal point a through diode $D_4$, resistance $R_{13}$ $D_4$ and button switch $S_1$, connect capacitors $C_4$, $C_5$ to the input side of not gates $G_6$, $G_7$ at this terminal point b. Also, connect it to the side of rectifying current circuit from terminal point b through resistance $R_{18}$ and earth the terminal on the side of this rectifying current circuit through capacitor $C_7$. Then, earth it from terminal point b through zener diode ZD and capacitor $C_6$ and from an automatic overload relay part D by connecting capacitor $C_8$, selective change-over switch $SW_2$, ressitance $R_{17}$, diodes $D_{14}$, $D_{10}$, variable resistance $VR_4$ and not gate $G_2$ from terminal point b. Connect it to the cathode side of diode $D_6$ from terminal point 2 through diode $D_5$ and to the input of not gate $G_6$ from terminal point 2 through diode $S_{12}$ and then earth it from this input side through resistance $R_{16}$. Afterwards, connect the emitter side of transistor $Q_2$ directly to earthing point and the input terminal of not gate $G_2$ to the terminal point 1 of selective change-over switch $SW_3$ and connect it to the collector terminal of transistor $Q_5$ from the input side of not gate $G_3$ through resistance $R_{12}$. Then, earth it from the positive terminal side of bridge rectifying current circuit through auxiliary relay RY and the collector emitter of transistor $Q_4$ and connect resistance $R_{19}$ and capacitor $C_1$ to AC input source terminals $L_1$ $L_2$ and then to bridge rectifying current circuit DR.

Thus the current invention is constituted by effecting conections as hereinabove described.

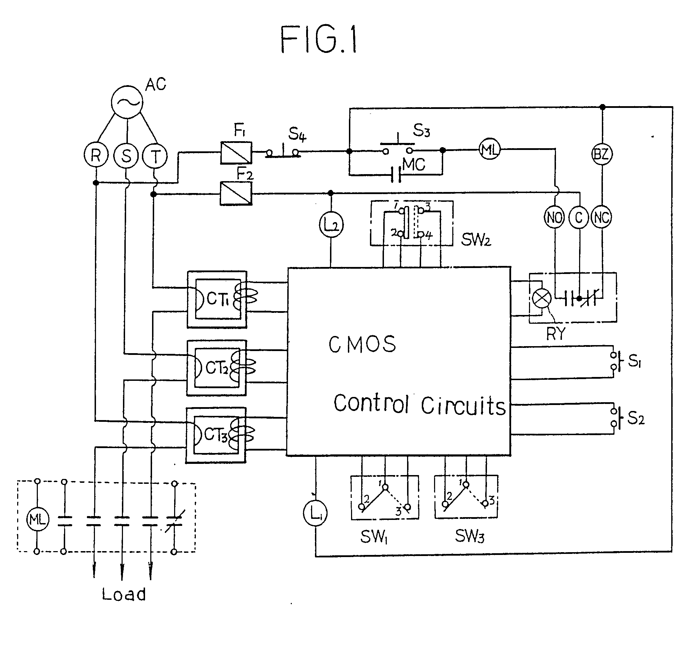

As to Figure 1, it is a connection diagram designed to illustrate the outer connection method of overcurrent relay in order to make its operation principles understood easily.

When an explanation is given to the operation and effects of the present invention constituted with such circuits as herein-above mentioned, it is as follows.

The signal detected in the current transformers $CT_1$, $CT_2$, and $CT_3$ is half-rectified by blocking diodes $D_1$, $D_2$ and $D_3$ and connects resistance $R_3$

(which controls the lowest limit of current setting) and current-setting-variable-resistance $VR_2$ (which controls the highest limit of current setting), and momentary-operation-control-variable-resistance $VR_1$ (which sets the highest limit and the lowest limit of momentary element A). When minute DC voltage is impressed on the terminal point a (which is connected in parallel to the temperature compensation thermistor TH), bias voltage of transistors for amplification $Q_1$, $Q_2$, $Q_3$ is impressed and this minute signal is amplified in the transistor $Q_1$ and when the amplified signal is applied to the input terminal of not gate $G_1$, phase effects amplification with its turn in the opposite direction and a high level of signal lights up light emitting diode LED through diode $D^9$ and resistance $R^9$ or recognition of overload starting condition.

The output signal of not gate $G_1$ is charged to capacitor $C_2$ through diode $D_7$ and operation time control variable resistance $VR_3$ and then through the terminals 2, 1 of selective change-over switch $SW_3$. The charging speed varies depending on variable resistance $VR_3$, time constant of capacitor $C_2$ and size of overload strength.

If the charged voltage of capacitor $C_2$ rises above half the power source of not gate $G_2$, the output of not gate $G_2$ will reach the low level momentarily and the output of not gate $G_3$ will come up to the high level. As the output of not gate $G_4$ comes down to the low level and transistor $Q_4$ becomes off, auxiliary relay RY becomes off and falls into an overload condition.

This overload condition is maintainable at a continued pace until the charged voltage of capacitor $C_2$ is discharged forcibly by pushing a reset switch $SW_2$. It is because a high level of the output terminal of not gate $G_3$ is fed back to the input side of not gate $G_2$ by resistance $R_{17}$ and feed back diode $D_{14}$.

The output terminal of not gate $G_1$ comes down to the low level in the normal condition where an overload signal is not given. The charged voltage of capacitor $C_2$ forms an automatic reset circuit, which is discharged through resistance $R_9$, by biasing the positive voltage, which is distributed by resistance $R_8$ and capacitor $C_9$, to transistor $Q_3$. Thus, pulsating load is prevented from being subjected to an erroneous operation.

If the output terminal of not gate $G_1$ comes up to the high level with an overload signal inputted, transistor $Q_3$ will be placed in the "off" condition by impressing negatively voltage on the base side thereof by means of power supply voltage rectifying current circuit B and discharge of capacitor $C_2$ will come to a stop and an overload signal will start its operation with the commencement of charge.

However, when an overload signal appears intermittently, capacitor $C_3$ will prevent a signal from being accumulated by repeating intermittent charge and discharge and then prevent erroneous operation from taking place on the pulsating load.

Then, an explanation will be given to an automatic reset overloaded circuit D where its high level is maintained by removing diode $D_{14}$ and the feed back circuit of resistance $R_{17}$ from selective change-over switch $SW_2$ and by inputting a capacitor $C_8$ signal to not gate $G_3$, and variable resistance $VR_4$ and diode $D_{10}$ connected in parallel are connected between the output side of not gate $G_2$ and the input side of not gate $G_3$. When the charged voltage of capacitor $C_2$ rises above half the power source voltage of not gate $G_2$ due to its overload, the output of not gate $G_2$ will come down to the low level and the input of not gate $G_3$ which has maintained its high level by means of capacitor $C_8$ will be momentarily discharged by diode $D_{10}$ and come down to the low level. At this time, if the input side of not gate $G_3$ is low, relay RY will be put in the off condition because the output side of not gate $G_3$ becomes high and the output side of not gate $Q_4$ becomes low and transistor $Q_4$ is not biased. When relay is off, an overload signal will cease to exist because the magnetic contractor will also open and break loaded current.

Accordingly, when the input of not gate $G_1$ is high, the output thereof is low and the input of not gate $G_2$ is low and the output becomes high. However, the input side of not gate $G_3$ is maintained at a low level by the capacitor $C_8$ which is already charged at a negative potential and the positive potential of not gate $G_2$ at a high level is gradually charged through variable resistance $VR_4$ for control of return time. When the input voltage of not gate $G_3$ rises above half the power source voltage, the output of not gate $G_3$ becomes low and the output of not gate $G_4$ becomes high and transistor $Q_4$ becomes biased and auxiliary relay RY is switched on.

Thus, it is reset to its original state. Namely, automatic return time is determined according to the time constant of variable resistance $VR_4$ of capacitor $C_8$.

If this automatic reset-type overload circuit is used for automatic reset-type current limiting relay, it is suitable for substitution of maximum demand meter as a load limiter of capacitor, making it possible to achieve power supply on a planned basis.

Furthermore, short circuit of the power transmission line is kept off by connecting momentary operation element part A constituted by being connected to variable resistance $VR_1$, resistances $R_1$, $R_2$, which set the highest value and the lowest value of momentary element, transistor $Q_5$ and protective resistance $R_{12}$ of not gate $G_3$. Resistance $R_1$ is used to set the lowest current value. Resistance $R_2$ is used to set the highest current value. Variable resistance $VR_1$ is used to control momentary operation current. Resistance $R_{12}$ is to protect IC circuit. Thermosistor (TH) is for temperature compensation.

If short circuit takes place in the line, strong pulse-type voltage formed on the secondary side of current transformers $CT_1$ to $CT_3$ is inputted to the base side of transistor $Q_5$ by variable resistance $VR_1$ and the input terminal of not gate $G_3$ becomes low when transistor $Q_5$ is turned on.

Accordingly, the output terminal of not gate $G_4$ becomes low, transistor $Q_4$ becomes off and overload relay starts its operation.

The principle of operation according to anti-time-limit characteristic curve was described hereinabove. Next, an explanation will be given to a circuit designed to obtain a definite time-limit characteristic curve.

When the terminal point 1 of selective change-over switch $SE_3$ is switched in the direction of the dotted line of terminal point 3, the input side of not gate $G_7$ will be placed at a high level by capacitor $C_5$ in the normal condition where it is connected to the output terminal of not gate $G_1$ through diode $D_{11}$ and the output terminal of not gate $G_7$ will be kept at a low level.

As no signal voltage is impressed on the secondary side of current transformers $CT_1$ to $CT_3$ and there exists no base voltage of transistor $Q_2$ under no-load condition, transistor $Q_2$ is off and the input terminal of not gate $G_5$ is high and the output terminal thereof is low. Accordingly, the output terminal of not gate $G_6$ is high and output terminal of not gate $G_7$ is low.

When a start is made, if load is motor load, the output terminal of not gate $G_1$ becomes high because sextuple current flows but, as the output terminal of not gate $G_7$ is at a low level, the output signal of not gate $G_1$ is discharged through diode $D_{11}$ and the input terminal of not gate $G_2$ is kept at a low level. However, immediately after voltage is impressed on the base side of transistor $Q_2$ by overload, transistor $Q_2$ is on and the output terminal of not gate $G_5$ is high and the output terminal of not gate $G_6$ is low. When the charged voltage of capacitor $C_5$ is gradually discharged through variable resistance $VR_5$ and this voltage drops below half the power source voltage, the output terminal of not gate $G_7$ becomes high and the discharge of not gate $G_2$ input signal comes to a stop. Thus, the input terminal of not gate $G_2$ becomes high and the output terminal of not gate $G_2$ becomes low. As the charged voltage of capacitor $C_8$ is immediately discharged through diode $D_{10}$, the input terminal of not gate $G_3$ becomes low and the output terminal thereof becomes high. Thus, the output of not gate $G_4$ is low, transistor $Q_4$ is off and loaded current is broken.

In this case, when motor starts, overload operation according to the time constant of capacitor $C_5$ and variable resistance $VR_5$ can be made to delay and, when load fails to start within the fixed time, loaded current is immediately broken.

In this case, diode $D_{12}$ is a feed back diode aimed to keep overload operation.

When the terminal point 1 of of change-over switch $SW_1$ is brought into contact with terminal point 2, it becomes an accurate definite time-limit overcurent relay and, when brought into contact with terminal point 3, it can be used as an accurate momentary overcurrent relay. When the terminal point 1 of selective change-over switch $SW_2$ is brought into contact with terminal point 2 thereof, it becomes a manual reset-type overcurrent relay and, when the terminal point 3 is brought into contact with terminal point 4, it becomes an automatic reset-type overcurrent relay. It is easy to test the operation of overload relay without causing overload current to flow between DC source side and terminal point by means of diode $D_4$ and button switch $S_1$.

In order to use the scope of relay operation power source, AC-capacitor ca and inrushing current prevention resistance $R_{19}$ are connected to the AC input side of bridge rectifier DR and, on the DC side of bridge rectifier DR, a smoothing circuit composed of capacitors $C_7$, $C_6$ and resistance $R_{18}$ is formed and zener diode ZD is connected thereto in order to supply constant voltage to IC.

Figure 1 is a block diagram to show the operation principle of power source relay under the present invention. When an explanation is given thereto according to Figure 1, it comes as follows:

When power source is supplied to 3-phase AC source terminals R, S, T and voltage is impressed on the relay operation power source terminals $L_2$ $L_1$ through fuses $F_1$ $F_2$ and off button switch $S_4$, it is energized to auxiliary relay RY coil and auxiliary contact connection undergoes a change.

If on-switch $S_3$ turns on at this juncture, circuit will start its operation and loaded current will flow by the energization of magnetic contactor coil ML.

At this moment, if overcurrent flows and overcurrent relay operates, supplementary relay will turn off and loaded current will be broken by turning magnetic contactor coil ML off.

The principle that auxiliary relay RY will turn off when the power is cut off, if energized in such a normal case as this, is because it is similar to a no voltage relay. This overcurrent relay will then fulfill the function of no-voltage relay.

As the present invention, which operates in a manner as hereinabove described, is designed to learn the actual load current by means of current setting variable resistance and light emitting diode, it sets overload so accurately that it may accumulate overload signals and operates unerringly even when tremulously loaded (frequent start) or pulsatingly loaded (excessive load fluctuation). As the present invention is so simplified as to be used by increasing or decreasing with one relay the penetration frequency of conductor on the primary side of a wide variety of converters, which range from a fraction of 1 Hp to several thousand Hp, production costs are reducible and power consumption is economizable to the maximum extent on a small DC relay operation principle by enabling power source supply to achieve gradual decrease in AC voltage by means of of phase-advancing AC capacitor. It can be used both with 110V and 220V. Also, it can be used as a multipurpose relay because it has a function both as a no-voltage relay and as an induction disk-type overcurrent relay and fulfils the function of ammeter. It is given compensation for temperature so that it may not be affected by the surrounding temperature (−20°C to 70°C). It is characteristic of being small in size and compact in structure.

As shown in Figure 2, it is an effective invention as it can be used as a ground relay by removing and by-passing a blocking diode installed on the secondary side of converter.

## Claims

1. An electronic overcurrent relay for protecting a 3-phase AC electronic system, against short circuit and overload conditions, said electronic overcurrent relay being supplied.

with DC power by a DC output of a power bridge rectifier (DR) whose AC input is fed by two phases (R, T) of said 3-phase AC electric system,

with a voltage signal sensed from said 3-phase AC electric system according to the maximum phase voltage thereof, said electronic overcurrent relay comprising

i) a momentary operation circuit means (A) for deriving a momentary signal from said voltage signal in the event of a short circuit condition;

ii) an overload delay circuit means comprising a RC circuit ($VR_3$, $C_2$; $VR_5$, $C_5$) for deriving an overload signal from said voltage signal after the lapse of a delay time in the event of an overload condition;

3i) a reset overload circuit means (D) for resetting the electronic overcurrent relay circuit after ceasing of an overload condition;

4i) an auxiliary relay (RY) and a switching transistor ($Q_4$) connected in series across said DC output of said power bridge rectifier (DR), said transistor ($Q_4$) being switched according to the operation of momentary operation circuit means (A), overload delay circuit means and of reset overload circuit means (D), and

5i) an overload recognition circuit means comprising a light emitting means (LED) for visually indicating an overload condition, characterised by

6i) CMOS integrated circuitry comprising not gates ($G_1$ to $G_7$) which are interconnecting said momentary operation circuit means (A), said overload delay circuit means and said reset overload circuit means (D) with a control input of said switching transistor ($Q_4$), and

7i) an overload accumulative prevention circuit comprising discharge transistor means ($Q_3$) which is connected to said RC circuit ($VR_3$, $C_2$) such as to prevent erroneous operation of said switching transistor ($Q_4$) in the event of an tremulous or pulsating load and, hence, of an intermittently appearing overload condition.

2. An overcurrent relay according to claim 1, wherein said overload delay circuit means comprises a first overload delay circuit ($VR_3$, $C_2$) having an anti-time-limit characteristic curve and further comprises a second overload delay circuit ($VR_5$, $C_5$) having a definite time-limit characteristic curve, said first and second overload delay circuits being selectively activated by a first selective change-over switch ($SW_3$).

3. An overcurrent relay according to claims 1 or 2, wherein a first amplifier ($Q_1$) is feeding said first overload delay circuit ($VR_3$, $C_2$) with said voltage signal and a second amplifier ($Q_2$) is feeding said second overload delay circuit ($VR_5$, $C_5$) with said voltage signal.

4. An overcurrent relay according to one of claims 1 to 3, wherein a first not gate ($G_1$) of the CMOS integrated circuitry transfers the amplified voltage signal from said first amplifier ($Q_1$) to said first overload delay circuit ($VR_3$, $C_2$).

5. An overcurrent relay according to one of claims 1 to 4, wherein said first selective change-over switch ($SE_3$) is connected between resistor ($VR_3$) and capacitor ($C_2$) of said first overload delay circuit ($VR_2$, $C_2$), the root of said first selective change-over switch ($SW_3$) being connected to the input of a second not gate ($G_2$) of said CMOS integrated circuitry whose output is fed via series coupled third and fourth not gates ($G_3$, $G_4$) to said switching transistor ($Q_4$).

6. An overcurrent relay according to one of claims 1 to 5, wherein the amplified voltage signal from said second amplifier ($Q_2$) is fed via series coupled fifth and sixth not gates $G_5$, $G_6$) of said CMOS integrated circuitry to said second overload delay circuit ($VR_5$, $C_5$).

7. An overcurrent relay according to one of claims 1 to 6, wherein a seventh not gate ($G_7$) of said CMOS integrated circuitry is connected with its input to the junction between resistor ($VR_5$) and capacitor ($C_5$) of said second overload delay circuit ($VR_5$, $C_5$) and is able to be coupled with its output via first selective change-over switch ($SW_3$) to the input of said second not gate ($G_2$).

8. An overcurrent relay according to one of claims 1 to 7, wherein the output of said momentary operation circuit means (A) is fed via limiting resistor ($R_{12}$) to the input of said third not gate ($G_3$).

9. An overcurrent relay according to one of claims 1 to 8, wherein said reset overload circuit means (D) comprises a second selective change-over switch ($SW_2$) which selectively couples the output of said third not gate ($G_3$) via feedback diode ($D_{12}$) to the input of said third not gate ($G_3$) to a capacitor ($C_8$) which is charged by said power bridge rectifier (DR).

10. An overcurrent relay according to one of claims 1 to 9, wherein said light emitting means (LED) of said overload recognition circuit means is fed via diode ($D_6$) by the output of said first not gate ($G_1$) and via diode ($D_5$) by the output of said third not gate ($G_3$).

11. An overcurrent relay according to one of claims 1 to 10, wherein said transistor means ($Q_3$) of said overload accumulation prevention circuit means and a limiter resistor ($R_9$) are connected in series at both ends of the capacitor ($C_2$) of said overload delay circuit ($VR_3$, $C_2$), and wherein a control overload accumulation prevention circuit means is derived from the output of said first not gate ($G_1$).

12. An overcurrent relay according to one of claims 1 to 11, wherein a further selective change-over switch ($SW_1$) is connected with its root to said second amplifier (Q₂) and with its switching terminals to said common point (a) and said first amplifier (Q₁).

13. An overcurrent relay according to one of claims 1 to 12, wherein a constant voltage circuit is provided comprising a series connection of an inrush current prevention resistor (R₁₉) and of a voltage drop phase-advancing capacitor (Ca) being connected between an AC input (L₂) and said power bridge rectifier (DR), and further comprising a series resistor (R₁₈), a first and a second cross capacitor (C₆, C₇) and a cross connected zener diode (ZD) coupled to the positive DC output terminal of said power bridge rectifier (DR).

**Patentansprüche**

1. Elektronisches Überstromrelais zum Schutz eines elektrischen 3-Phasen-Wechselstromsystems gegen Kurzschluß und Überlastungsbedingungen, wobei diesem Überstromrelais

Gleichstrom vom Gleichstromausgang eines Brückengleichrichters (DR), dessen Wechselstromeingang durch zwei Phasen (R, T) des elektrischen 3-Phasen-Wechselstromsystems zugeführt wird,

ein Spannungssignal, das entsprechend der Höchstphasenspannung vom elektrischen, 3-Phasen-Wechselstromsystem wahrgenommen wird, zugeführt wird,

wobei das elektronische Überstromrelais umfaßt:

(i) eine Schaltungseinrichtung für den Momentbetrieb (A) zur Ableitung eines Momentsignals vom Spannungssignal im Falle einer Kurzschlußbedingung;

(ii) eine Schaltungseinrichtung zur Überlastungsverzögerung, die eine RC-Schaltung (VR₃, C₂; VR₅, C₅), um im Fall einer Überlastungbedingung vom Spannungssignal nach dem Ablauf der Verzögerungszeit ein Überlastungssignal abzuleiten;

(iii) eine Schaltungseinrichtung zur Überlastungsrückstellung (D) zum Rückstellen der elektronischen Schaltung des Überlastungsrelais nach dem Nachlassen der Überlastungsbedingung;

(iv) ein Hilfsrelais (RY) und ein Schalttransistor (Q₄), die entlang des Wechselstromauaganges des Leistungsbrückengleichrichters (DR) in Reihe verbunden sind, wobei der Transistor (Q₄) entsprechend dem Betrieb der Schaltungseinrichtung für den Momentbetrieb (A), der Schaltungseinrichtung zur Überlastungsverzögerung und der Schaltungseinrichtung (D) zur Überlastungsrückstellung geschaltet wird, und

(v) eine Schaltungseinrichtung zum Erkennen der Überlastung, die eine lichtemittierende Einrichtung (LED) umfaßt, um die Überlastungsbedingung visuell anzuzeigen, gekennzeichnet durch

(vi) eine integrierte Komplementär-MOS-Schaltung, die Nicht-Glieder (G₁ bis G₇) umfaßt, die die

Schaltungseinrichtung für den Momentbetrieb (A), die Schaltungseinrichtung für die Überlastungsverzögerung und die Schaltungseinrichtung für due Überlastungsrückstellung (D) mit der Kontrolleingabe des Schalttransistors (Q₄) verbinden, und

(vii) eine Schaltung zur Verhinderung der Ansammlung der Überlastung, dsie eine Transistoreinrichtung zur Entladung (Q₃) unfaßt, die an die RC-Schaltung verbunden ist (VR₃, C₂), um einen fehlerhaften Betrieb des Schalttransistors (Q₄) im Falle einer zitternden oder pulsierenden Last und im Falle einer diskontinuierlich auftretenden Überlastungsbedingung zu verhindern.

2. Überstromrelais nach Anspruch 1, worin die Schaltungseinrichtung zur Überlastungsverzögerung eine erste Überlastungsverzögerung eine erste Überlastungsverzögerungsschaltung (VR₂, C₂) mit zeitbegrenzingsfreier Kennlinie und weiterhin eine zweite Überlastungsverzögerungsschaltung (VR₅, C₅) mit einer definierten Zeitbegrenzungs-Kennlinie umfaßt, wobei die erste und die zweite Überlastungsverzögerungsschaltung durch den ersten selektiven Wechselschalter (SW₃) selektive aktiviert werden können.

3. Überstromrelais nach den Ansprüchen 1 oder 2, worin ein erster Verstärker (Q₁) der ersten Überlastungsverzögerungsschaltung (VR₃, C₂) das Spannungssignal zuführt und ein zweiter Verstärker (Q₂) der zweiten Überlastungsverzögerungsschaltung (VR₅, C₅) das Spannungssignal zuführt.

4. Überstromrelais nach einem der Ansprüche 1 bis 3, worin das erste Nicht-Glied (G₁) der integrierten Komplementär-MOS-Schaltung das verstärkte Spannungssignal vom ersten Verstärker (Q₁) zur ersten Überlastungsverzögerungsschaltung (VR₃, C₂) überträgt.

5. Überstromrelais nach einem der Ansprüche 1 bis 4, worin der erste selektive Wechselschalter (SW₃) zwischen dem Widerstand (VR₃) und dem Kondensator (C₂) der ersten Überlastungsverzögerungsschaltung (VR₃, C₂) verbunden ist, wobei der Fußpunkt des ersten selektiven Wechselschalters (SE₃) mit dem Eingang des zweiten Nicht-Glieds (G₂) der integrierten Komplementär-MOS-Schaltung verbunden ist, derem Ausgang über eine Reihe verbundener dritter und vierter Nicht-Glieder (G₃, G₄) an den Schalttransistor (Q₄) verbunden ist.

6. Überstromrelais nach einem der Ansprüche 1 bis 5, worin das verstärkte Spannungssignal vom zweiten Verstärker (Q₂) über eine Reihe verbundener fünfter und sechster Nicht-Glieder (G₅, G₆) der integrierten Komplementär-MOS-Schaltung de zweiten Überlastungsverzögerungsschaltung (VR₅, C₅) zugeführt wird.

7. Überstromrelais nach einem der Ansprüche 1 bis 6, worin ein siebtes Nicht-Glied (G₇) der integrierten Komplementär-MOS-Schaltung mit seinem Eingang an die Verbindung zwischen dem Widerstand (VR₅) und dem Kondensator (C₅) des zweiten Überlastungsverzögerungskreises (VR₅, C₅) verbunden ist und mit seinem Ausgang über den ersten selektiven Wechselschalter (SW$_3$) mit dem Eingang des zweiten Nicht-Glieds (G$_2$) verbunden werden kann.

8. Überstromrelais nach einem der Ansprüche 1 bis 7, worin das Ausgangssignal der Schaltungseinrichtung für den Momentbetrieb (A) über den Begrenzungswiderstand (R$_{12}$) zum Eingang des dritten Nicht-Glieds (G$_3$) geleitet wird.

9. Überstromrelais nach einem der Ansprüche 1 bis 8, worin die Schaltungseinrichtung zür Überlastungsrückstellung (D) einen zweiten selektiven Wechselschalter (SE$_2$) umfaßt, der das Ausgangssignal des dritten Nicht-Glieds (G$_3$) über die Rückkopplungsdiode (D$_{12}$) zum Eingang des zweiten Nicht-Glieds (G$_2$) oder den Eingang des dritten Nicht-Glieds (G$_3$) an den kondensator (C$_8$) selektiv verbindet, der durch den Leistungsbrückengleichrichter (DR) geladen wird.

10. Überstromrelais nach einem der Ansprüche 1 bis 9, worin eine lichtemittierende Einrichtung (LED) der Schaltungseinrichtung zur Erkennung der Überlastung über die Diode (D$_6$) mit dem Ausgangssignal des ersten Nicht-Glieds (G$_1$) und über die Diode (D$_5$) mit dem Ausgangssignal des dritten Nicht-Glieds (G$_3$) beschickt wird.

11. Überstromrelais nach einem der Ansprüche 1 bis 10, worin die Transistoreinrichtung (Q$_3$) der Schaltungseinrichtung zur Verhinderung der Ansammlung der Überlastung und der Begrenzungswiderstand (R$_9$) an beiden Seiten des Kondensators (C$_2$) der Überlastungsverzögerungsschaltung (VR$_3$, C$_2$) in Reihe verbunden sind und worin das Regelsignal für die Transistoreinrichtung (Q$_3$) der Schaltungseinrichtung zur Verhinderung der Ansammlung der Überlastung vom Ausgangssignal des ersten Nicht-Glieds (G$_1$) abgeleitet wird.

12. Überstromrelais nach einem der Ansprüche 1 bis 11, worin ein weiterer selektiver Wechselschalter (SW$_1$) mit seinem Fußpunkt an den zweiten Verstärker (Q$_2$) und mit seinen Schaltpolen and den gemeinsamen Punkt (a) und den ersten Verstärker (Q$_1$) verbunden ist.

13. Überstromrelais nach einem der Ansprüche 1 bis 12, worin eine Schaltung mit konstanter Spannung vorgersen ist, die eine Reihenverbindung eines Widestands (R$_{19}$) zur Verhinderung des Einschaltstromstroßes und eines Spannungsabfall-Phasenverschiebungskondensators (Ca) umfaßt, die zwischen der Wechselstromeingabe (L$_2$) und dem Leistungsbrückengleichrichter (DR) verbunden sind, und weiterhin einen Reihenwiderstand (R$_{18}$), einen ersten und einen zweiten Kreuzkondensator (C$_6$, C$_7$) und eine im Kreuz verbundene Zener-Diode (ZD) unfaßt, die an den positiven Gleichstromausgangspol des Leistungsbrückengleichrichters (DR) verbunden ist.

**Revendications**

1. Relais électronique de surintensité servant à protéger un système électrique à courant alternatif triphasè vis-à-vis de conditions de court-circuit et de surcharge, ledit relais électronique de surintrensité étant alimenté

avec une énergie à courant continu par une sortie à courant continu d'un redresseur de puissance en pont (DR), dont l'entrée à courant alternatif est alimentée par deux phases (R, T) dudit système électrique à courant alternatif triphasé,

avec un signal de tension détecté à partir dudit système électrique à courant alternatif triphasé conformément à la tension de phase maximale de ce système, ledit relais électronique de surintensité comprenant

i) des moyens (A) formant circuit à fonctionnement instantané servant à dériver un signal instantané dudit signal de tension dans le cas d'une condition de courtcircuit;

ii) des moyens formant circuit de retardement d'une surcharge, comprenant un circuit RC (VR$_3$, C$_2$; VR$_5$, C$_5$) servant à dériver un signal de surcharge dudit signal de tension après l'écoulement d'un temps de retard dans le cas d'une condition de surcharge;

3i) des moyens (D) formant circuit de remise à l'état initial en cas de surcharge, pour remettre à l'état initial le circuit du relais électronique de surintensité après la suppression d'une condition de surcharge;

4i) un relais auxiliaire (RY) et un transistor de commutation (Q$_4$), branchés en série aux bornes de ladite sortie à courant continu dudit redresseur de puissance en pont (DR), ledit transistor (Q$_4$) étant commuté conformément au fonctionnement des moyens (A) formant circuit à fonctionnement instantané, des moyens formant circuit de retardement de surcharge et des moyens (D) formant circuit de remise à l'état initial en cas de surcharge, et

5i) des moyens formant circuit d'identification d'une surcharge et comprenant des moyens émetteurs de lumière (LED) servant à indiquer visuellement une condition de surcharge, caractérisé par

6i) un circuit intégré CMOS comprenant des portes NON (G$_1$ à G$_7$) pour interconnecter lesdits moyens (A) formant circuit à fonctionnement instantané, lesdits moyens formant circuit de retardement d'une surcharge et lesdits moyens (D) formant circuit de remise à l'état initial en cas de surcharge, à une entrée de commande dudit transistor de commutation (Q$_4$), et

7i) un circuit empêchant l'accumulation de surcharges et comprenant des moyens (Q$_3$) formant transistor de décharge, qui sont raccordés audit circuit RC (VR$_3$, C$_2$) de manière à empêcher un fonctionnement erroné dudit transistor de commutation (Q$_4$) dans le cas d'une charge tremblottante ou pulsatoire et, par conséquent, d'une condition de surcharge apparaissant de façon intermittente.

2. Relais de surintensité selon la revendication 1, selon lequel lesdits moyens formant circuit de retardement d'une surcharge comprennent un premier circuit (VR₃, C₂) de retardement d'une surcharge, qui possède une courbe caractéristique anti-action différée, et comprennent de plus un second circuit de retardement (VR₅, C₅), qui possède une courbe caractéristique à action différée définie, lesdits premier et second circuits de retardement d'une surcharge étant activés de façon sélective par un premier commutateur sélectif (SW₃).

3. Relais de surintensité selon la revendication 1 ou 2, dans lequel un premier amplificateur (Q₁) envoie ledit signal de tension audit premier circuit (VR₃, C₂) de retardement d'une surcharge, et un second amplificateur (Q₂) envoie ledit signal de tension audit second circuit (VR₅, C₅) de retardement d'une surcharge.

4. Relais de surintensité selon l'une des revendications 1 à 3, dans lequel une première porte NON (G₁) du circuit intégré CMOS transfère le signal de tension amplifié depuis ledit premier amplificateur (Q₁) audit premier circuit (VR₃, C₂) de retardement d'une surcharge.

5. Relais de surintensité selon l'une quelconque des revendications 1 à 4, dans lequel ledit premier commutater sélectif (SW₃) est branché entre la résistance (VR₃) et la condensateur (C₂) dudit premier circuit (VR₃, C₂) de retardement d'une surcharge, la base dudit premier commutateur sélectif (SW₃) étant raccordée à l'entrée d'une seconde porte NON (G₂) dudt circuit intégré CMOS, dont la sortie est raccordée audit transitor de commutation (Q₄), par l'intermédiaire de troisième et quatrième portes NON (G₃, G₄) branchées en série.

6. Relais de surintensité selon l'une des revendications 1 à 5, dans lequel le signal de tension amplifié délivré par ledit second amplificateur (Q₂) est envoyé par l'intermédisire de cinquième (Q₂) est envoyé par l'intermédiaire de cinquième et sixième portes NON (G₅, G₆) branchées en série, dudit circuit intégré CMOS audit second circuit (VR₄, C₅) de retardement d'une surcharge.

7. Relais de surintensité selon l'une des revendications 1 à 6, dans lequel une septième porte NON (G₇) dudit circuit intégré CMOS est raccordée par son entrée à la jonction entre la résistance (VR₅) et le condensateur (C₅) dudit second circuit (VR₅, C₅) de retardement d'une surcharge et peut être accouplée par sa sortie, par l'intemédiaire du premier commutateur sélectif (SW₃), à l'entrée de ladite seconde porte NON (G₂).

8. Relais de surintensité selon l'une des revendications 1 à 7, dans lequel la sortie desdits moyens (A) formant circuit à fonctionnement instantané est raccordée par l'intermédiaire d'une résistance de limitation (R₁₂) à l'entrée de ladite troisième porte NON (G₃).

9. Relais de surintensité selon l'une des revendications 1 à 8, dans lequel lesdits moyens (D) formant circuit de remise à l'état initial en cas de surcharge comprennent un second commutateur sélectif (SW₂), qui connecte de façon sélective, la sortie de ladite troisième porte NON (G₃) par l'intermédiaire d'une diode de réaction (D₁₂) à l'entrée de ladite seconde porte NON (G₂), ou l'entrée de ladite troisième porte NON (G₃) à un condensateur (C₈), qui est chargé par ledit redresseur de puissance en pont (DR).

10. Relais de surintensité selon l'une des revendications 1 à 9, dans lequel lesdits moyens émetteurs de lumière (LED) desdits moyens formant circuit d'identification de surcharges sont alimentés, par l'intermédiaire de la diode (D₆), par la sortie de ladite première porte NON (G₁) et, par l'intermédiaire de la diode (D₅), par la sortie de ladite troisième porte NON (G₃).

11. Relais de surintensité selon l'une des revendications 1 à 10, dans lequel lesdits moyens formant transistor (Q₃) desdits moyens formant circuit de prévention d'une accumulation de surcharges et une résistance de limitation (R₉) sont branchés en série aux deux extrémités du condensateur (C₂) dudit circuit (VR₃, C₂) de retardement d'une surcharge, dans lequel un signal de commande pour lesdits moyens formant transistor (Q₃) desdits moyens formant circuit de prévention d'une accululation de surcharges, est dérivé de la sortie de ladite ppremière porte NON (G₁).

12. Relais de surintensité selon l'une des revendications 1 à 11, dans lequel un autre commutateur sélectif (SW₁) est raccordé par sa base audit second amplificateur (Q₂) et par ses bornes de commutation audit point commun (a) et audit premier amplificateur (Q₁).

13. Relais de surintensité selon l'une des revendications 1 à 12, dans lequel il est prévu un circuit délivrant une tension constante, qui comporte le montage en série d'une résistance (R₁₉) empêchant un courant d'enclenchement et d'un condensateur (Ca) provoquant une chute de tension avec avancement de phase, ce montage série étant branché entre une entrée à courant alternatif (L₂) er ledit redresseur de puissance en pont (DR), et ledit relais de surintensité comportant en outre une résistance série (R₁₈), des premier et second condensateurs transversaux (CX₆, C₇) et une diode Zener (ZD) branchée selon un montage transversal et accouplée à la borne de sortie à courant continu positive dudit redresseur de puissance en point (DR).

# FIG.1

Load

# FIG.2

EP 0 221 185 B1

# FIG.3

# FIG.4